# EUROPEAN PATENT SPECIFICATION

(11) **EP 1 835 673 B1**
(45) Date of publication and mention of the grant of the patent: **15.06.2011**
(21) Application number: 07110361.8
(22) Date of filing: 26.04.2004
(51) Int. Cl.: H04L 12/56

(54) **Network fabric access device with multiple system side interfaces**
Netzwerkvermittlungsstellenzugriffsgerät mit Mehrsystemschnittstellen
Dispositif d'accès de matrice de commutation avec interfaces multi-système

(30) Priority: 25.04.2003 US 465654 P; 23.04.2004 US 831711
(43) Date of publication of application: 19.09.2007
(62) Divisional of application: 04300226.0
(73) Proprietor: Alcatel IP Networks, Inc., Plano, TX 75075 (US)
(72) Inventor: Willhite, Nelson, Sunnyvale, CA 94085 (US); Noll, Mike, San Jose, CA 95139 (US); Martin, Robert Steven, Los Gatos, CA 95030 (US); Duggal, Akhil, Los Altos, CA 94022 (US); Lindberg, Craig, Nevada City, CA 95959 (US); Jones, Thomas Carleton, San Jose, CA 95121 (US); Komidi, Srinivas, Cupertino, CA 95014 (US)
(74) Representative: Nicolle, Olivier

(56) References cited:
- US-A- 5 303 078
- US-B1- 6 259 693
- US-B1- 6 483 850
- TANABE S ET AL: "A new distributed switching system architecture for B-ISDN" 1990, INTERNATIONAL CONFERENCE ON INTEGRATED BROADBAND SERVICES AND NETWORKS (CONF. PUBL. NO. 239)PAGE(S) 258-263 , LONDON, UK , XP006519130 * the whole document *

## Description

### CROSS REFERENCE TO RELATED APPLICATIONS

This application claims priority to U.S. Provisional Patent Application No. 60/465,654 entitled NETWORK SWITCH FABRIC ACCESS INTEGRATED CIRCUIT filed April 25, 2003.

### FIELD OF THE INVENTION

The present invention relates generally to data networking. More specifically, a switch fabric access device with two system side interfaces is disclosed.

### BACKGROUND OF THE INVENTION

In data communication networks, devices such as routers and switches are typically used to transfer data from a source to a destination. Existing switching systems often employ a switch fabric for switching data from source ports (also referred to as input ports) to destination ports (also referred to as output ports).

Fabric access devices are commonly used to manage data between the switch fabric and the rest of the system. A fabric access device may perform functions such as data buffering, data prioritization, redundancy management, etc. A typical fabric access device includes a single system interface configured to receive data from and send data to an external system or port. The configuration of such devices tends to have limited flexibility. For example as disclosed in document US 5 303 078, if redundancy is required, the fabric access device is typically connected to the switch fabric via two fabric interfaces. During normal operation, one of the fabric interfaces is active, and the other fabric interface is standing by. If the active fabric interface fails, the standby fabric interface takes over and continues to transfer data between the fabric access node and the switch fabric. Since twice the bandwidth on the fabric interface is required to service the bandwidth available on the system interface, such a configuration is said to provide full 2:1 redundancy. This approach is useful for providing a high level of redundancy since in the event that all of the active fabric interface links are lost, as long as the standby links can take over in time, no data will be lost. However, the highly redundant configuration also means that half of the available bandwidth on the fabric access interface remain idle in standby mode much of the time, resulting in inefficient utilization of bandwidth. Document US 6 483 850 discloses a method and an apparatus for routing cells having different formats among service modules of a switch platform. Cells are received at the switch platform through the use of a several service modules and are transmitted from the service modules to a switch fabric via cell bus controllers. According to one aspect, a 1-to-N service module redundancy is provided for replacing a failed module. Such a redundancy is performed by associating two redundant cell bus controllers. In systems with less stringent redundancy requirements, it would be desirable if the fabric access device could allow more flexible configurations. For example, it may be useful to have fewer than half of the available interface links for redundancy purposes so that the available bandwidth is more efficiently utilized.

### BRIEF DESCRIPTION OF THE DRAWINGS

Various embodiments of the invention are disclosed in the following detailed description and the accompanying drawings.
Figure 1 is a block diagram illustrating a fabric access device configuration according to some embodiments.
Figure 2A is a block diagram illustrating an example of a fabric access device configured in loop back mode.Figure 2B is a block diagram illustrating another example configuration that includes two fabric access devices.
Figure 3 is a block diagram illustrating another example configuration of two fabric access devices according to some embodiments.
Figure 4 is a flowchart illustrating a failover process according to the embodiment shown in Figure 3.
Figure 5 is a flowchart illustrating the processing of a data cell received by the fabric access node, according to some embodiments.

### DETAILED DESCRIPTION

The invention can be implemented in numerous ways, including as a process, an apparatus, a system, a composition of matter, a computer readable medium such as a computer readable storage medium or a computer network wherein program instructions are sent over optical or electronic communication links. In this specification, these implementations, or any other form that the invention may take, may be referred to as techniques. In general, the order of the steps of disclosed processes may be altered within the scope of the invention.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

A fabric access device with two or more system side interfaces is disclosed. In some embodiments, the fabric access device includes a plurality of system interfaces and a routing circuit. In one mode, the routing circuit is configured to send data received on one of the plurality of system interfaces via a fabric interface to a switch fabric. In some embodiments, the routing circuit is configured to send data received on a first one of the plurality of system interfaces via a second one of the plurality of system interfaces. The fabric access device is configurable to offer different levels of redundancy and utilization of the available capacity.

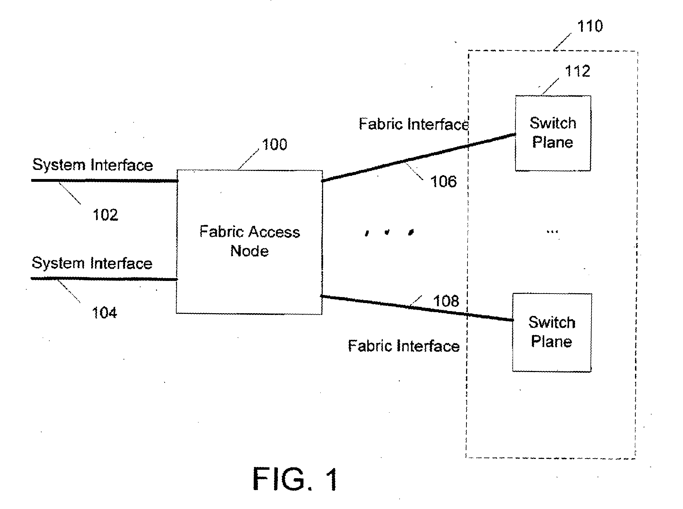

Figure 1 is a block diagram illustrating a fabric access device configuration according to some embodiments. In this example, the fabric access device includes a fabric access node 100, a plurality of system interfaces (such as 102 and 104), and one or more fabric interfaces (such as 106 and 108). For the purpose of illustration, two interfaces per fabric access device are shown in Figure 1 and discussed in the following discussion, although fewer or more interfaces may be included in some embodiments. Each interface may include multiple physical links. The fabric access device allows flexible mapping between its interfaces. The fabric access node includes a routing circuit (not shown) that is configurable to pass traffic between the two system interfaces (in a "loop back" mode) as well as to pass traffic between the system interfaces and the fabric interfaces. The fabric access node is capable of performing functions such as buffering input data, scheduling data to be transmitted, mapping system interface links and fabric interface links, mapping one set of system interface links to another set of system interface links, etc.

In the example shown, the fabric access node 100 is configured to associate system interface links and fabric interface links, thus allowing data to be transferred from a system interface link to an appropriate fabric interface link and vice versa. The system interfaces and fabric interfaces are represented with thick solid lines to indicate that each of the interfaces may include more than one physical link. Each of the system interfaces is configured to receive data from and send data to one or more external systems such as another fabric access device, an input/output module, one or more system ports, etc. The fabric interfaces are configured to send data to and from a switch fabric 110. Multiple fabric access nodes may be connected to the switch fabric in some embodiments. In this example, the switch fabric includes multiple switch planes such as 112. Each fabric interface may be coupled to one or more switch planes.

The flexible mapping allows the capacity of the fabric switch to be more efficiently used and support a wide range of applications. The fabric access device may be configured to support a high level of redundancy in some embodiments. For example, the fabric interfaces support twice the capacity of the system interfaces in some embodiments. All the links in the fabric interfaces are used to service traffic. If any of the fabric interfaces fails (that is, if the hardware, software or combination thereof associated with the interface itself fails, or if the links associated with the fabric interface become unavailable (due to, for example, failure in the switch fabric)), data is routed to be sent via the remaining, available links and not through the failed link. In the event of link failure, the system continues to function even if up to half of the total links have failed. Thus, 2:1 redundancy is provided.

The system may be reconfigured to more efficiently utilize the available capacity for applications that do not require such a high level of redundancy. In some embodiments, the capacity of the fabric interfaces is less than twice that of the system interfaces. For example, in an "N-1" redundancy system (assuming N links per system interface), the capacity of the fabric interfaces may be equal to that of the system interfaces. If an active fabric interface link fails, traffic is rerouted to the remaining links to prevent data loss. Such systems exhibit graceful performance degradation in the event of failure. Different traffic rerouting techniques may be adopted depending on the implementation.

Fabric access devices with multiple system interfaces may also offering improved scalability. Previously, the number of ports supported by a switch fabric is determined by the number of fabric ports, since each fabric port only has access to one set of system interfaces. If a fabric access device allows each fabric port to connect to two system interfaces, then the total number of ports supported by the system is doubled.

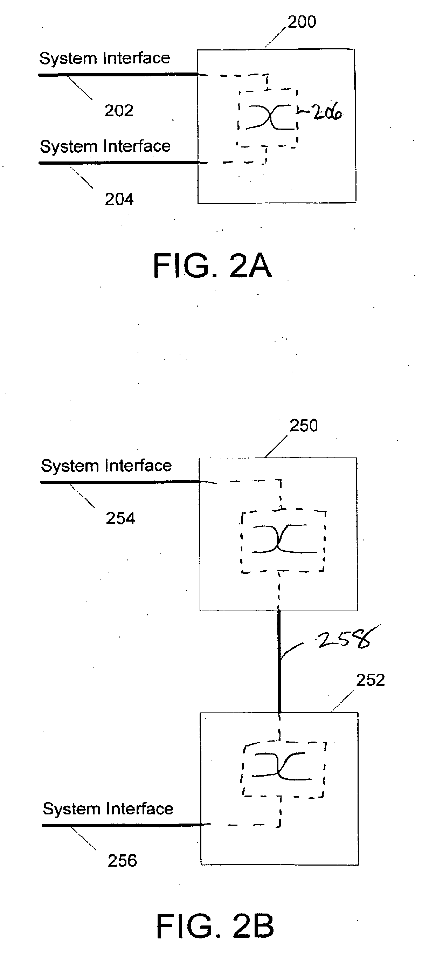

Fabric access devices with multiple system interfaces may operate without being connected to a switch fabric. Figure 2A is a block diagram illustrating an example of a fabric access device configured in loop back mode. In this example, fabric access node 200 is configured to route cells received on system interface 202 or system interface 204 to the other of system interfaces 202 and 204 via routing (or mapping) circuit 206. This configuration may be a software programmable feature that is enabled in some embodiments. Without connections to the switch fabric, fabric access node 200 acts as a two port switch in this configuration. Such a configuration allows two system ports to be serviced by a single fabric access device without requiring any separate switch fabric devices or circuits.

Figure 2B is a block diagram illustrating another example configuration that includes two fabric access devices. In this example, two fabric access nodes 250 and 252 are configured in a loop back configuration. Two system interfaces, one from each fabric access node, are coupled to form interface 258. Fabric access nodes 250 and 252 perform mapping operations among the interface links and switch data among the system interface links.

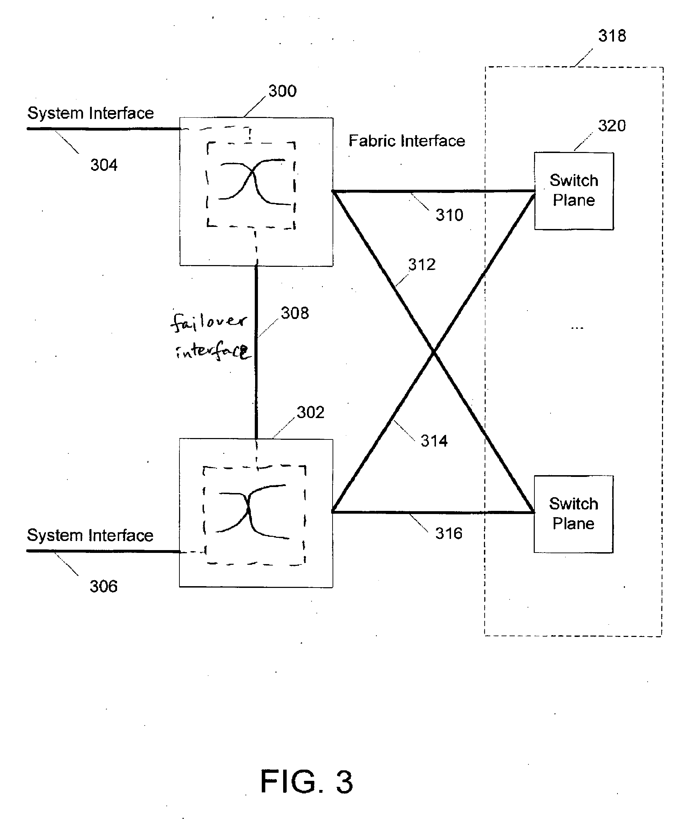

Figure 3 is a block diagram illustrating another example configuration of two fabric access devices according to some embodiments. In this example, two fabric access nodes 300 and 302 are coupled to switch fabric 318 via fabric interfaces 310 - 316. The fabric interfaces are connected to a plurality of switch planes such as switch plane 320. The fabric access nodes are coupled to one or more external systems via system interfaces 304 and 306. A failover interface 308 is formed by connecting the remaining system interfaces of each of the fabric access nodes. During normal operation, the failover interface is not used. If, however, one of the fabric access nodes experiences failure in its connection to the switch fabric, data associated with the fabric access node that has lost its connections to the switch fabric is then handled by the other fabric access node via the failover interface. Details of the failover are discussed below. The configuration shown in this example offer a broader range of redundancy options, and allows the fabric interface links to be utilized more efficiently.

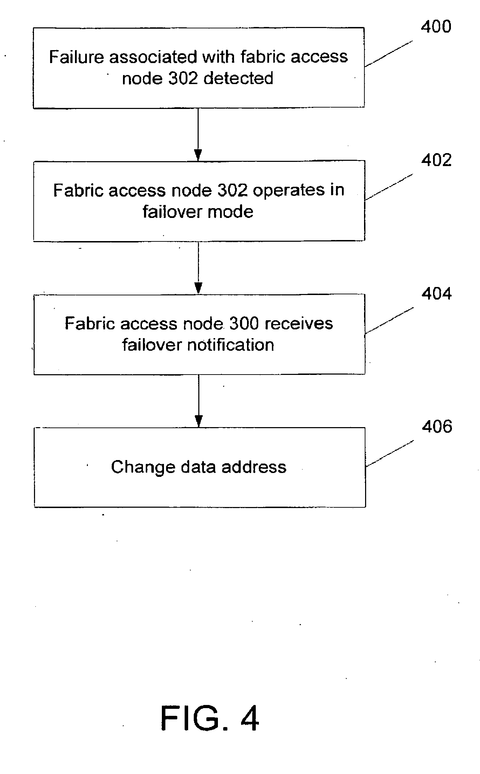

Figure 4 is a flowchart illustrating a failover process according to the embodiment shown in Figure 3. For the purpose of example, it is assumed that fabric access node 302 has failed. Once the failure is detected (400), fabric access node 302 enters a failover mode (402) where it forwards data received on system interface 306 via failover interface 308 to fabric access node 300 so that data may be sent to the appropriate fabric interface. Fabric access node 300 also receives a failover notification (404). When node 302 is in the failover mode, active fabric access node 300 handles data originally associated with fabric access node 302. For example, active node 300 receives ingress cells via failover interface 308 and sends them via appropriate links into the switch fabric on behalf of node 302 to be switched to their destination. For egress cells received from the switch fabric, active node 300 recognizes egress cells associated with failed node 302 (e.g., by an additional bit in the cell address, as described more fully below) and routes those cells to node 302 via failover interface 308 for delivery to their respective destinations via system interface 306.

In order to comply with data access protocols and to ensure that data is delivered to the appropriate destinations, the address of data may be changed (406) so that the appropriate path is chosen. For example, in one embodiment, when not in failover mode a five bit field in the header of a data cell is used to designate the address of the fabric access node to which a particular cell is being sent (e.g., in an embodiment with 32 logical ports). Fabric access node 300 may be represented as 00000 and fabric access node 302 may be represented as 00001. When failover occurs, data received on system interface 306 is sent via the failover interface 308 to fabric access node 300 to be forwarded, and data destined for system ports associated with system interface 306 is sent to fabric access node 300 to be forwarded via the failover interface 308 to fabric access node 302, and subsequently system interface 306. To achieve proper data addressing, in some embodiments the source address of data originating from system interface 306 is set to 00000 instead of 00001. In some embodiments, address data in the data (e.g., cell) itself is not changed, but the switch fabric associates the data with address 00000 because it is received by the switch fabric via a link associated with that address. Thus, from the perspective of the switch fabric, all incoming data is sent by address 00000 via fabric access node 300, therefore any response data should also be sent to the same address via fabric access node 300. In some embodiments, an auxiliary address field is used to distinguish the origin of the data. The auxiliary address field may include one or more additional bits for identifying the fabric access node with which data is associated. For example, auxiliary addresses of 0 or 1, e.g., an additional bit added to the five-bit address described above may be used to indicate that data is associated with fabric access node 300 or 302, respectively. The fabric access node can use the auxiliary address to determine whether data is to be forwarded via the failover interface to the other fabric access node. For example, node 300 may be configured in one embodiment to send data cells addressed to port 000000 out a first (e.g., primary) system interface and data cells addressed to port 100000 out a second system interface, e.g., a failover interface to port 302. In some embodiments, the switch fabric may be configured such that in the event a node such as node 302 loses its direct connections to the fabric cells to be sent to the port are redirected to the failover port (e.g., node 300) and the port address changed as required to enable the failover port to recognize the cell as being associated with the failed port.

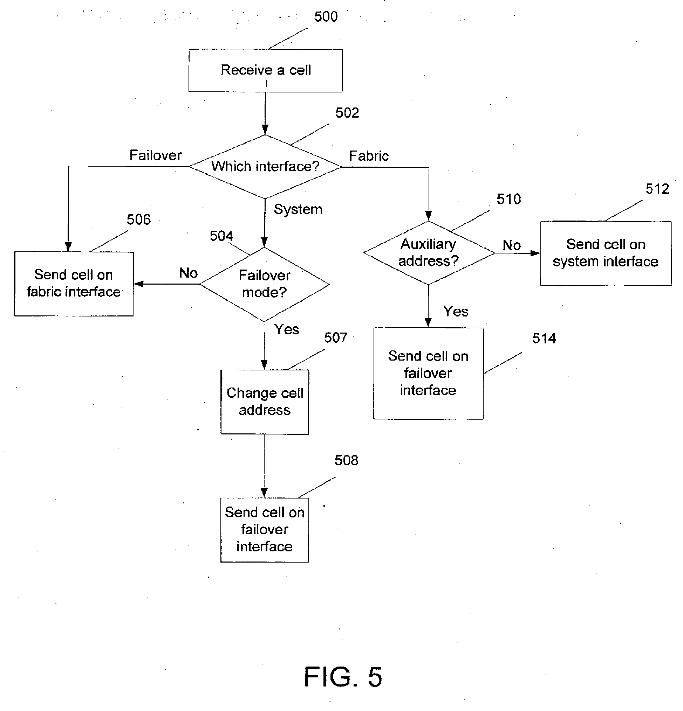

Figure 5 is a flowchart illustrating the processing of a data cell received by the fabric access node, according to some embodiments. For the purpose of clarity, in this example, the fabric access node on which the cell is received is referred to as the current fabric access node. Either the current fabric access node or the other fabric access node may be operating in failover mode.

In this example, a cell is received by the current fabric access node (500). It is then determined on which interface the cell is received (502). If the cell is received on the failover interface, it indicates that the other fabric access node has detected failure on its fabric interfaces, therefore data has been forwarded via the failover interface to the current fabric access node. The cell is then sent to the switch fabric via the fabric interface (506).

If the cell is received on the system interface, it indicates that the cell is sent from the external system to be switched by the switch fabric. It is then determined whether the current fabric access node is in failover mode. If the node is in failover mode, any appropriate change in the cell's address is made (507) and the cell is forwarded to the other active fabric access node via the failover interface (508). If the current node is not in failover mode, the cell is forwarded to the switch fabric via the fabric interface (506).

If the cell is received on the fabric interface, it is determined whether it includes an auxiliary address designation for the other fabric access node. If such an auxiliary address designation is present, the cell is forwarded via the failover interface to the other fabric access node and ultimately to the external system. Otherwise, the cell is sent to the external system via the system interface associated with the current fabric access node (512).

A fabric access device with multiple system interfaces has been disclosed. The approach is applicable to both striped architectures where data cells are segmented before they are transferred, and non-striped architectures where whole cells are transferred. Besides cells, other appropriate units of data transfer such as packets, frames, etc. may also be used.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A fabric access system comprising:
a first fabric access device (300) comprising:
a first system interface (304) configured to receive data from and send data to a first external system;
a second system interface; and
a first fabric interface (310, 312) configured to receive data from and send data to a switch fabric (318);
a second fabric access device (302) coupled to the first fabric access device (300), comprising:
a third system interface (306) configured to receive data from and send data to a second external system;
a fourth system interface connected to said second system interface of said first fabric access device (300); and
a second fabric interface (314, 316) configured to receive data
from and send data to the switch fabric (318);
wherein the connected second system interface and fourth system interface form a failover interface (308); and wherein in the event the second fabric interface (314, 316) or all of its associated links become unavailable, the second fabric access device (302) automatically routes data received on said third system interface (306) to said first fabric access device (300) via said fourth system interface (308).

2. A fabric access system as recited in Claim 1, wherein the first fabric access device (300) is configured to forward to the switch fabric (318) via the first fabric interface (310, 312) any data received on said second system interface (306).

3. A fabric access system as recited in Claim 1, wherein in the event the second fabric interface (314, 316) or all of its associated links become unavailable, the first fabric access device (300) is configured to determine upon receiving data via the first fabric interface (310, 312) whether the data is associated with the first fabric access device (300) or the second fabric access device (302).

4. A fabric access system as recited in Claim 1, wherein in the event the second fabric interface (314, 316) or all of its associated links become unavailable, the switch fabric (318) is configured to switch data having a destination address associated with a logical port associated with the second fabric access device (302) to a link associated with the first fabric access device (300).

5. A fabric access system as recited in Claim 4, wherein the switch fabric (318) is further configured to include with the data a port address associated with the second fabric access device (302) and the first fabric access device (300) is configured to recognize from the port address that the data is associated with the second fabric access device (302) and send the data to the second fabric access device (302) via the second system interface (308).

6. A method of transferring data via a switch fabric (318), comprising:
receiving (500) a data cell at a first fabric access device (300)
in the event the data cell was received on a system interface (304) associated with said first fabric access device (300):
■ determining (504) whether a fabric interface (310, 312) associated with said first fabric access device (300) has become unavailable; and
■ in the event said fabric interface (310, 312) has failed, transferring (508) said data cell via a failover interface (308) to a second fabric access device (306) to be forwarded to said switch fabric (318); or
■ in the event said fabric interface (310, 312) has not failed, transferring (506) said data cell via said fabric interface (310, 312) to said switch fabric;
in the event the data cell was received on said failover interface (308), transferring (506) said data cell to said switch fabric (318) via said fabric interface (310,312).

7. A method of transferring data via a switch fabric as recited in Claim 6, further comprising, in the event the data cell was received from said switch fabric (318):
receiving an address associated with the data cell; and
sending (512, 514) the data cell via a system interface (304, 306) associated with the address.

## Patentansprüche

1. Fabric-Zugangssytem, umfassend:
Eine erste Fabric-Zugangseinrichtung (300), umfassend:
Eine erste Systemschnittstelle (304), welche für den Empfang von Daten von einem und für das Senden von Daten an ein erste(n)(s) externe(n)(s) System konfiguriert ist;
eine zweite Systemschnittstelle; und
eine erste Fabric-Schnittstelle (310, 312), welche für den Empfang von Daten von einer und für das Senden von Daten an eine Switch-Fabric (318) konfiguriert ist;
eine zweite Fabric-Zugangseinrichtung (302), welche an eine erste Fabric-Zugangseinrichtung (300) gekoppelt ist, umfassend:
eine dritte Systemschnittstelle (306), welche für den Empfang von Daten von einem und für das Senden von Daten an ein zweite(n)(s) externe(n)(s) System konfiguriert ist;
eine vierte Systemschnittstelle, welche mit der besagten zweiten Systemschnittstelle der besagten ersten Fabric-Zugangseinrichtung (300) verbunden ist, und
eine zweite Fabric-Schnittstelle (314, 316), welche für den Empfang von Daten von der und für das Senden von Daten an die Switch-Fabric (318) konfiguriert ist;
wobei die miteinander verbundenen zweite und vierte Systemschnittstelle eine ausfallsichere Schnittstelle (308) bilden; und wobei, wenn die zweite Fabric-Schnittstelle (314, 316) oder alle ihre assoziierten Links unverfügbar werden, die zweite Fabric-Zugangseinrichtung (302) die auf der besagten dritten Systemschnittstelle (306) empfangenen Daten automatisch über die besagte vierte Systemsschnittstelle (308) an die besagte erste Fabric-Zugangseinrichtung (300) routet.

2. Fabric-Zugangssystem nach Anspruch 1, wobei die erste Fabric-Zugangseinrichtung (300) für die Weiterleitung aller auf der besagten zweiten Systemschnittstelle (306) empfangenen Daten über die erste Fabric-Schnittstelle (310, 312) an die Switch-Fabric (318) ausgelegt ist.

3. Fabric-Zugangssystem nach Anspruch 1, wobei, wenn die zweite Fabric-Schnittstelle (314, 316) oder alle ihre assoziierten Links unverfügbar werden, die erste Fabric-Zugangseinrichtung (300) dazu konfiguriert ist, bei Empfang von Daten über die erste Fabric-Schnittstelle (310, 312) zu ermitteln, ob die Daten mit der ersten Fabric-Zugangseinrichtung (300) oder mit der zweiten Fabric-Zugangseinrichtung (302) assoziiert sind.

4. Fabric-Zugangssystem nach Anspruch 1, wobei, wenn die zweite Fabric-Schnittstelle (314, 316) oder alle ihre assoziierten Links unverfügbar werden, die Switch-Fabric (318) dazu ausgelegt ist, Daten mit einer Zieladresse, welche mit einem mit der zweiten Fabric-Zugangseinrichtung (302) assoziierten logischen Port assoziiert ist, an einen mit der ersten Fabric-Zugangseinrichtung (300) assoziierten Link zu vermitteln.

5. Fabric-Zugangssystem nach Anspruch 4, wobei die Switch-Fabric (318) weiterhin dazu ausgelegt ist, den Daten eine mit der zweiten Fabric-Zugangseinrichtung (302) assoziierte Portadresse hinzuzufügen, und die erste Fabric-Zugangseinrichtung (300) dazu ausgelegt ist, aus der Portadresse zu erkennen, dass die Daten mit der zweiten Fabric-Zugangseinrichtung (302) assoziiert sind, und die Daten über die zweite Systemschnittstelle (308) an die zweite Fabric-Zugangseinrichtung (302) zu senden.

6. Verfahren zum Übertragen von Daten über eine Switch-Fabric (318), umfassend:
Empfangen (500) einer Datenzelle an einer ersten Fabric-Zugangseinrichtung (300),
wenn die Datenzelle auf einer mit der besagten ersten Fabric-Zugangseinrichtung (300) assoziierten Systemschnittstelle (304) empfangen wurde:
■ Ermitteln (504), ob eine mit der besagten ersten Fabric-Zugangseinrichtung (300) assoziierte Fabric-Schnittstelle (310, 312) unverfügbar geworden ist; und
■ wenn die besagte Fabric-Schnittstelle (310, 312) ausgefallen ist, Übertragen (508) der besagten Datenzelle über eine ausfallsichere Schnittstelle (308) an eine zweite Fabric-Zugangseinrichtung (306) für die Weiterleitung an die besagte Switch-Fabric (318); oder
■ wenn die besagte Fabric-Schnittstelle (310, 312) nicht ausgefallen ist, Übertragen (506) der besagten Datenzelle über die besagte Fabric-Schnittstelle (310, 312) an die besagte Switch-Fabric;
wenn die Datenzelle auf der besagten ausfallsicheren Schnittstelle (308) empfangen wurde, Übertragen (506) der besagten Datenzelle an die besagte Switch-Fabric (318) über die besagte Fabric-Schnittstelle (310, 312).

7. Verfahren zum Übertragen von Daten über eine Switch-Fabric nach Anspruch 6, weiterhin umfassend, wenn die Datenzelle von der besagten Switch-Fabric (318) empfangen wurde:
Empfangen einer mit der Datenzelle assoziierten Adresse; und
Senden (512, 514) der Datenzelle über eine mit der Adresse assoziierten Systemschnittstelle (304, 306).

## Revendications

1. Système d'accès à la matrice comprenant :
un premier dispositif d'accès à la matrice (300) comprenant :
une première interface système (304) configurée pour recevoir des données provenant d'un premier système externe et pour envoyer des données à celui-ci ;
une deuxième interface système ; et
une première interface de matrice (310, 312) configurée pour recevoir des données provenant d'une matrice de commutation (318) et pour envoyer des données à celle-ci ;
un deuxième dispositif d'accès à la matrice (302) couplé au premier dispositif d'accès à la matrice (300), comprenant :
une troisième interface système (306) configurée pour recevoir des données provenant d'un deuxième système externe et pour envoyer des données à celui-ci ;
une quatrième interface système connectée à ladite deuxième interface système dudit premier dispositif d'accès à la matrice (300) ; et
une deuxième interface de matrice (314, 316) configurée pour recevoir des données provenant de la matrice de commutation (318) et
pour envoyer des données à celle-ci ;
dans lequel la deuxième interface système et la quatrième interface système connectées forment une interface de basculement (308) ; et dans lequel dans le cas où la deuxième interface de matrice (314, 316) ou toutes ses liaisons associées deviennent indisponibles, le deuxième dispositif d'accès à la matrice (302) achemine automatiquement les données reçues dans ladite troisième interface système (306) vers ledit premier dispositif d'accès à la matrice (300) par l'intermédiaire de ladite quatrième interface système (308).

2. Système d'accès à la matrice selon la revendication 1, dans lequel le premier dispositif d'accès à la matrice (300) est configuré pour acheminer vers la matrice de commutation (318) toute donnée reçue sur ladite deuxième interface système (306) par l'intermédiaire de la première interface de matrice (310, 312).

3. Système d'accès à la matrice selon la revendication 1, dans lequel dans le cas où la deuxième interface de matrice (314, 316) ou toutes ses liaisons associées deviennent indisponibles, le premier dispositif d'accès à la matrice (300) est configuré pour déterminer lors de la réception de données par l'intermédiaire de la première interface de matrice (310, 312) si les données sont associées au premier dispositif d'accès à la matrice (300) ou au deuxième dispositif d'accès à la matrice (302).

4. Système d'accès à la matrice selon la revendication 1, dans lequel dans le cas où la deuxième interface de matrice (314, 316) ou toutes ses liaisons associées deviennent indisponibles, la matrice de commutation (318) est configurée pour commuter des données ayant une adresse de destination associée à un port logique associé au deuxième dispositif d'accès à la matrice (302) vers une liaison associée au premier dispositif d'accès à la matrice (300).

5. Système d'accès à la matrice selon la revendication 4, dans lequel la matrice de commutation (318) est en outre configurée pour comprendre, avec les données, une adresse de port associée au deuxième dispositif d'accès à la matrice (302) et le premier dispositif d'accès à la matrice (300) est configuré pour reconnaître à partir de l'adresse de port que les données sont associées au deuxième dispositif d'accès à la matrice (302) et pour envoyer les données au deuxième dispositif d'accès à la matrice (302) par l'intermédiaire de la deuxième interface système (308).

6. Procédé de transfert de données par l'intermédiaire d'une matrice de commutation (318), comprenant les étapes suivantes :
recevoir (500) une cellule de données dans un premier dispositif d'accès à la matrice (300)
dans le cas où la cellule de données a été reçue sur une interface système (304) associée audit premier dispositif d'accès à la matrice (300) :
■ déterminer (504) si une interface de matrice (310, 312) associée audit premier dispositif d'accès à la matrice (300) est devenue indisponible ; et
■ dans le cas où ladite interface de matrice (310, 312) est défaillante, transférer (508) ladite cellule de données, par l'intermédiaire d'une interface de basculement (308) vers un deuxième dispositif d'accès à la matrice (306), à acheminer vers ladite matrice de commutation (318) ; ou
■ dans le cas où ladite interface de matrice (310, 312) n'est pas défaillante, transférer (506) ladite cellule de données par l'intermédiaire de ladite interface de matrice (310, 312) vers ladite matrice de commutation ;
dans le cas où la cellule de données a été reçue sur ladite interface de basculement (308), transférer (506) ladite cellule de données vers ladite matrice de commutation (318) par l'intermédiaire de ladite interface de matrice (310, 312).

7. Procédé de transfert de données par l'intermédiaire d'une matrice de commutation selon la revendication 6, comprenant en outre les étapes suivantes, dans le cas où la cellule de données provenait de ladite matrice de commutation (318) :
recevoir une adresse associée à la cellule de données ; et
envoyer (512, 514) la cellule de données par l'intermédiaire d'une interface système (304, 306) associée à l'adresse.
